# EUROPÄISCHE PATENTANMELDUNG

(11) **EP 4 328 176 A1**
(43) Veröffentlichungstag der Anmeldung: **28.02.2024**
(21) Anmeldenummer: 22020408.5
(22) Anmeldetag: 24.08.2022
(51) Int. Cl.: C01B 3/02, C01B 3/50, F25J 3/06, C01B 3/48

(54) **VERFAHREN UND VORRICHTUNG ZU ERZEUGUNG VON AMMONIAKSYNTHESEGAS UNTER GERINGER FREISETZUNG VON KOHLENDIOXID**

(71) Anmelder: Linde GmbH, 82049 Pullach (DE)
(72) Erfinder: Lang, Martin, 82049 Pullach (DE); Klein, Bernd, 82049 Pullach (DE); Heinzel, Albrecht, 82049 Pullach (DE); Reinke, Michael, 82049 Pullach (DE); Köhler, Regina, 82049 Pullach (DE)
(74) Vertreter: Fischer, Werner

(57) **Zusammenfassung**

Die Erfindung betrifft ein Verfahren sowie eine Vorrichtung zur Erzeugung eines kohlenmonoxidfreien, weitgehend aus Wasserstoff und Stickstoff besehenden Make-up-Gases (15) für eine Ammoniaksynthese, wobei ein kohlenwasserstoffhaltiger Einsatz (2) in einer Reformiereinrichtung (B) umgesetzt wird, um ein Methan und Argon enthaltendes Syntheserohgas (5) zu erhalten, aus dem mit Hilfe von Wassergas-Konvertierung (G) und Sauergaswäsche (H) eine wasserstoffreiche, Kohlenmonoxid, Methan und Argon umfassende, als Rohwasserstoff bezeichnete Fraktion (8) entsteht, die zur Bildung des Make-up-Gases (15) verwendet wird. Kennzeichnend hierbei ist, dass der Rohwasserstoff (8) mit Hilfe einer kryogenen Gaszerlegung (K) in eine von Kohlenmonoxid, Methan und Argon freie Wasserstofffraktion (30) sowie ein methanreiches, argon- und stickstoffarmes Restgas (12) getrennt wird, das zurückgeführt und in der Reformiereinrichtung (B) umgesetzt wird, um das Methan und Argon enthaltende Syntheserohgas (5) zu erhalten, während zumindest ein Teil der von Kohlenmonoxid, Methan und Argon freien Wasserstofffraktion (30) als Make-up-Gas (15) weitergeführt oder mit Stickstoff zum Make-up-Gas (15) ergänzt wird.

## Beschreibung

Die Erfindung betrifft ein Verfahren zur Erzeugung eines kohlenmonoxidfreien, weitgehend aus Wasserstoff und Stickstoff besehenden Make-up-Gases für eine Ammoniaksynthese, wobei ein kohlenwasserstoffhaltiger Einsatz in einer Reformiereinrichtung umgesetzt wird, um ein Methan und Argon enthaltendes Syntheserohgas zu erhalten, aus dem mit Hilfe von Wassergas-Konvertierung und umfassende, als Rohwasserstoff bezeichnete Fraktion entsteht, die zur Bildung des Make-up-Gases verwendet wird.

Weiterhin betrifft die Erfindung eine Vorrichtung zur Durchführung des erfindungsgemäßen Verfahrens.

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es praktisch ausschließlich nach dem Haber-Bosch-Verfahren aus Stickstoff und Wasserstoff synthetisiert. Zwar werden Wasserstoff und Stickstoff heute noch überwiegend unter Bildung und Freisetzung großer Mengen klimaschädlichen Kohlendioxids erzeugt, doch gibt es verstärkt Anstrengungen, das anfallende Kohlendioxid nicht in die Atmosphäre zu entlassen, sondern durch Sequestrierung oder stoffliche Nutzung zu entsorgen.

Beim Haber-Bosch-Verfahren wird ein vorwiegend aus Wasserstoff und Stickstoff bestehendes Ammoniaksynthesegas, in dem die beiden Stoffe in dem für die Synthese von Ammoniak stöchiometrischen Verhältnis von 3:1 vorliegen, mit einem Druck zwischen 100 und 200bar(a) einer Ammoniaksynthese zugeführt, um mit katalytischer Unterstützung in einem Ammoniakreaktor exotherm zu Ammoniak umgesetzt zu werden. Aufgrund thermodynamischer Limitierungen erfolgt die Umsetzung allerdings nur unvollständig, so dass ein Gasgemisch entsteht, das neben Ammoniak auch erhebliche Wasserstoff- und Stickstoffanteile enthält. Mit einer Temperatur zwischen 400 und 450°C verlässt dieses Gasgemisch den Ammoniakreaktor und wird nachfolgend in einer Reihe von Wärmetauschern abgekühlt, um Ammoniak durch Kondensation abzuscheiden und ein weitgehend aus Wasserstoff und Stickstoff bestehendes, Reste nicht abgeschiedenen Ammoniaks enthaltendes Recyclegas zu erhalten, das zur Erhöhung der Ammoniakausbeute in einem Synthesekreislauf zum Ammoniakreaktor zurückgeführt und dabei mit einem Make-up-Gas zum Ammoniaksynthesegas gemischt wird.

Nach dem Stand der Technik wird zur Erzeugung eines Make-up-Gases für die Ammoniaksynthese ein kohlenwasserstoffhaltiger Einsatz, bei dem es sich etwa um Erdgas handelt, ggf. entschwefelt und anschließend mit Sauerstoff oder sauerstoffangereicherter Luft beispielsweise durch Partielle Oxidation oder Autothermalreformierung zu einem Syntheserohgas reformiert, das großenteils aus Wasserstoff, Kohlenmonoxid sowie Kohlendioxid besteht und das insbesondere dann, wenn die Reformierung unter Einsatz von Luftsauerstoff erfolgt, auch signifikante Argonmengen enthält. Anschließend wird das Syntheserohgas einer Wassergas-Konvertierung unterzogen, um das enthaltene Kohlenmonoxid mit Wasser zu Wasserstoff und Kohlendioxid umzusetzen. In einer Sauergaswäsche wird Kohlendioxid aus dem konvertierten Gas abgetrennt, wobei eine Kohlendioxidfraktion mit einer für seine Sequestrierung oder stofflichen Nutzung ausreichenden Reinheit sowie eine als Rohwasserstoff bezeichnete Wasserstofffraktion, die neben Wasserstoff auch Argon sowie Reste von Kohlenmonoxid und Kohlendioxid umfasst, erhalten werden.

Damit Kohlenmonoxid nicht über das Make-up-Gas in den Ammoniakreaktor gelangen und das dort eingesetzte Katalysatormaterial vergiften kann, wird der Rohwasserstoff nach dem Stand der Technik durch Methanisierung, Stickstoffwäsche oder Druckwechseladsorption behandelt, wobei Kohlenmonoxid umgewandelt oder abgetrennt wird und eine weitgehend kohlenmonoxidfreie Wasserstofffraktion entsteht, aus der - ggf. durch Zugabe von Stickstoff - das Make-up-Gas gebildet wird, das aufgrund seines geringen, typischerweise unterhalb von 10ppmv liegenden Kohlenmonoxidgehalts als kohlenmonoxidfrei angesprochen wird.

Bei der Methanisierung werden im Rohwasserstoff enthaltenes Kohlenmonoxid und Kohlendioxid mit Wasserstoff zu Wasser und Methan umgewandelt, das genauso wie Argon unter den Bedingungen der Ammoniaksynthese inert ist. Um eine Anreicherung von Methan und Argon im Synthesekreislauf der Ammoniaksynthese zu verhindern, wird kontinuierlich ein Teil des Recyclegases als sog. Purgegas ausgeschleust und entweder verworfen oder einem Purgegaszerleger zugeführt, über den der im Purgegas enthaltene Wasserstoff mit erheblichem Energieaufwand zurückgewonnen wird. Auch wenn Methan und Argon inerte Stoffe sind, wirken sie sich negativ auf die Ammoniaksynthese aus, da sie die Partialdrücke von Stickstoff und Wasserstoff absenken und so deren Umsetzung beeinträchtigen. Darüber hinaus bedingen sie größere Apparate und höhere Antriebsleistungen der im Synthesekreislauf eingesetzten Verdichter.

In einer Stickstoffwäsche wird der getrocknete Rohwasserstoff gegen anzuwärmende Verfahrensströme abgekühlt und mit Hilfe von importiertem Hochdruckstickstoff, der i.Allg. gasförmig von einem Luftzerleger bezogen und ebenfalls gegen anzuwärmende Verfahrensströme abgekühlt und verflüssigt wird, in einer Kolonne gewaschen. Das vom Kopf dieser Waschkolonne gereinigt abgezogene Gas, das hauptsächlich aus Wasserstoff und Stickstoff besteht und das für den Katalysator der Ammoniaksynthese schädliches Kohlenmonoxid nur noch in einer unkritischen Menge enthält, wird gegen abzukühlende Verfahrensströme angewärmt und ggf. mit Stickstoff angereichert, um die für das Make-up-Gas geforderte Zusammensetzung einzustellen. Nach einer optionalen Zwischenentspannung zum Zweck der Rückgewinnung von coabsorbiertem Wasserstoff, wird der mit den aus dem Rohwasserstoff abgetrennten Komponenten beladene Stickstoff aus dem Sumpf der Waschkolonne gegen abzukühlende Verfahrensströme angewärmt und zu einem Restgas verdampft, das neben Stickstoff und Kohlenmonoxid auch Methan und das im Rohwasserstoff enthaltene Argon umfasst. Zur Nutzung von Methan und Kohlenmonoxid für die Produktion des Make-up-Gases, kann das Restgas prinzipiell vor den Reformierungsschritt zurückgeführt werden, was allerdings aufgrund der zu vermeidenden Argonanreicherung und der großen zu verdichtenden Stickstoffmenge mit einem erheblichen apparativen und finanziellen Aufwand verbunden ist. Das Restgas wird daher üblicherweise unter Bildung von Kohlendioxid verbrannt, das aus den bei der Verbrennung erzeugten Rauchgasen nicht wirtschaftlich abgetrennt werden kann, und das daher in die Atmosphäre entlassen wird.

Die Behandlung des Rohwasserstoffs durch Druckwechseladsorption erlaubt es, die für die Bildung des Make-up-Gases bestimmte, weitgehend kohlenmonoxidfreie Wasserstofffraktion mit einer Reinheit von mehr als 99,5Vol.-% zu erhalten, wobei in der Ammoniaksynthese inerte Stoffe lediglich in Spuren enthalten sind. Die Ammoniaksynthese kann daher sehr effektiv, ohne kontinuierliche Ausschleusung von Purgegas aus dem Synthesekreislauf betrieben werden. Da das bei der Druckwechseladsorption anfallende, zu einem großen Teil aus brennbaren Stoffen wie Kohlenmonoxid und Methan bestehende Restgas auch das im Rohwasserstoff enthaltene Argon umfasst, wird es nicht vor den Reformierungsschritt zurückgeführt, sondern ebenfalls unter Freisetzung von Kohlendioxid in die Atmosphäre verbrannt.

Mit den hier geschilderten Methoden lassen sich nur maximal 95% des zur Ammoniakproduktion eingesetzten Kohlenstoffs in Form von Kohlendioxid abtrennen und durch Sequestrierung entsorgen oder stofflich nutzen. Je nach den gesetzlichen Vorgaben und Pönalen auf die Kohlendioxidemissionen, kann es erforderlich sein, höhere Kohlenstoff-Abtrennquoten zu realisieren, was aber nach dem Stand der Technik nur mit einer sehr aufwendigen und entsprechend teuren Rest- bzw. Purgegas-Aufbereitung zu erreichen ist.

Die vorliegende Erfindung stellt sich die Aufgabe, ein gattungsgemäßes Verfahren sowie eine Vorrichtung zu dessen Durchführung anzugeben, die es ermöglichen, mehr als 95% des eingesetzten Kohlenstoffs mit geringerem Aufwand abzutrennen, als dies nach dem Stand der Technik möglich ist.

Diese Aufgabe wird verfahrensseitig erfindungsgemäß dadurch gelöst, dass der Kohlenmonoxid, Methan, Stickstoff und Argon enthaltende Rohwasserstoff mit Hilfe einer kryogenen Gaszerlegung in eine von Kohlenmonoxid, Methan und Argon freie Wasserstofffraktion sowie ein methanreiches, argon- und stickstoffarmes Restgas getrennt wird, von dem wenigstens ein Teil zurückgeführt und in der Reformiereinrichtung umgesetzt wird, um das Methan und Argon enthaltende Syntheserohgas zu erhalten, während zumindest ein Teil der von Kohlenmonoxid, Methan und Argon freien Wasserstofffraktion als Make-up-Gas weitergeführt oder mit Stickstoff zum Make-up-Gas ergänzt wird.

Die Freiheit der Wasserstofffraktion von Kohlenmonoxid, Methan oder Argon ist so zu verstehen, dass sie einen Kohlenmonoxidgehalt von weniger als 10ppm, einen Methangehalt von weniger als 50ppm oder einen Argongehalt von weniger als 300ppm aufweist. Das methanreiche, argon- und stickstoffarme Restgas besteht zu mehr als 50Vol.-% aus Methan, zu weniger als 3Vol.-% aus Argon und zu nicht mehr als 20Vol.-% aus Stickstoff. Es enthält wenigstens 70%, bevorzugt mehr als 90% des Methans, weniger als 50%, vorzugsweise nicht mehr als 30% des Argons und weniger als 5%, bevorzugt weniger als 1,5% des Stickstoffs, die in die kryogene Gaszerlegung eingebrachten werden.

Wegen des fehlenden oder doch sehr kleinen Stickstoffballasts ist der apparative und energetische Aufwand gering, mit dem das ganze Restgas oder zumindest ein Teil des Restgases vor die Reformierung zurückgeführt werden kann. Darüber hinaus kommt es aufgrund der Argonfreiheit zu keiner oder nur einer sehr geringen Argonanreicherung, so dass kein oder nur sehr wenig Gas aus dem zurückgeführten Restgasstrom als Purgegas ausgeschleust werden muss.

Der Rohwasserstoff wird der kryogenen Gaszerlegung entweder direkt oder nach einem Aufbereitungsschritt, der eine Gastrocknung umfasst, als Einsatz (Kryo-Einsatz) zugeführt. Vorzugsweise wird der Kryo-Einsatz bei der kryogenen Gaszerlegung so weit abgekühlt, dass der größte Teil des enthaltenen Methans auskondensiert. Das dabei entstehende zweiphasige Stoffgemisch wird in einem Abscheider getrennt, wobei eine methanreiche Flüssigphase sowie eine wasserstoffreiche Gasphase, die den überwiegenden Teil des im Kryo-Einsatz vorhandenen Argons und ggf. Kohlenmonoxids enthält, entstehen. Die mit dem Druck des Kryo-Einsatzes vorliegende methanreiche Flüssigphase wird argonarm aus dem Abscheider abgezogen und gegen den abzukühlenden Kryo-Einsatz zu einer methanreichen Gasfraktion verdampft und angewärmt, die zumindest einen Teil des methanreichen, argon- und stickstoffarmen Restgases bildet.

Zur Abtrennung von Argon und ggf. Kohlenmonoxid wird die im Abscheider erhaltene wasserstoffreiche Gasphase einer Wäsche mit tiefkaltem Flüssigstickstoff unterzogen, bei der eine weitgehend aus Flüssigstickstoff bestehende Sumpffraktion entsteht, die mit absorbiertem Argon, Methan und ggf. Kohlenmonoxid beladen ist, die daneben aber auch co-absorbierten Wasserstoff enthält. Die Stickstoffwäsche wird sinnvollerweise so durchgeführt, dass eine weitgehend aus Wasserstoff bestehende, mit Stickstoff angereicherte Gasphase erhalten wird, in der Kohlenmonoxid und Argon in Konzentrationen vorliegen, die eine Verwendung dieser Gasphase zur Bildung des Make-up-Gases für die Ammoniaksynthese ohne einen weiteren Trenn- oder Reinigungsschritt erlauben. Die weitgehend aus Wasserstoff bestehende, mit Stickstoff angereicherte Gasphase wird daher nach Anwärmung gegen abzukühlende Verfahrensströme und ggf. nach Zumischung von weiterem Stickstoff als Make-up-Gas weitergeführt.

Die Stickstoffwäsche kann insbesondere dann vorteilhaft durchgeführt werden, wenn der Rohwasserstoff durch Methanisierung und anschließende Gastrocknung aufbereitet wird, so dass der der Kryo-Einsatz mit einem Kohlenmonoxidgehalt von wenigen ppm entsteht. Unter dieser Voraussetzung ist es möglich, die Stickstoffwäsche auf die Entfernung von Argon auszulegen, das wesentlich einfacher als Kohlenmonoxid und mit geringerem apparativem Aufwand aus der im Abscheider erhaltenen wasserstoffreichen Gasphase abgetrennt werden kann.

Die bei der Stickstoffwäsche anfallende Sumpffraktion, die den weit überwiegenden Teil des im Rohwasserstoff vorliegenden Argons, daneben aber auch Wasserstoff, Methan und ggf. Kohlenmonoxid enthält, wird vorzugsweise in zwei unterschiedlich große Teilströme getrennt, von denen der größere nach Verdampfung und Anwärmung gegen abzukühlende Verfahrensströme verworfen wird, um ausreichend Argon auszuschleusen. Der kleinere Teilstrom wird dagegen sinnvollerweise in das methanreiche, argon- und stickstoffarme Restgas überführt, wozu er mit der methanreichen Flüssigphase aus dem Abscheider vereinigt oder unabhängig von dieser verdampft und angewärmt wird.

Der für die Stickstoffwäsche benötigte tiefkalte Flüssigstickstoff wird bevorzugt aus gasförmigem Stickstoff erzeugt, der mit einem im Vergleich zum Rohwasserstoff leicht erhöhten Druck aus einer Stickstoffquelle, bei der es sich beispielsweise um einem kryogenen Luftzerleger handelt, dem kryogenen Gaszerleger zugeführt und dort gegen anzuwärmende Verfahrensströme abgekühlt und verflüssigt wird.

Bevorzugt wird der kohlenwasserstoffhaltige Einsatz durch Dampfreformierung, Partielle Oxidation, Autothermalreformierung oder einer Kombination dieser Verfahren zu dem Methan und Argon enthaltenden Syntheserohgas reformiert.

Weiterhin betrifft die Erfindung eine Vorrichtung zur Erzeugung eines kohlenmonoxidfreien, weitgehend aus Wasserstoff und Stickstoff besehenden Make-up-Gases für eine Ammoniaksynthese, mit einer Reformiereinrichtung, in der ein kohlenwasserstoffhaltiger Einsatz zu einem Methan und Argon enthaltenden Syntheserohgas reformiert werden kann, einer Wassergas-Konvertierung und einer Sauergaswäsche, mit deren Hilfe aus dem Syntheserohgas eine wasserstoffreiche, Kohlenmonoxid, Methan und Argon umfassende, als Rohwasserstoff bezeichnete Fraktion erzeugbar ist, sowie einer Bildungseinrichtung, in der aus dem Rohwasserstoff das Make-up-Gas gebildet werden kann.

Die gestellte Aufgabe wird vorrichtungsseitig erfindungsgemäß dadurch gelöst, dass die Bildungseinrichtung einen kryogenen Gaszerleger umfasst, mit dessen Hilfe der Rohwasserstoff in eine von Kohlenmonoxid, Methan und Argon freie Wasserstofffraktion sowie ein methanreiches, argon- und stickstoffarmes Restgas trennbar ist, wobei die Bildungseinrichtung mit der Reformiereinrichtung derart verbunden ist, dass das Restgas zurückgeführt und durch Reformierung umgesetzt werden kann, um das Methan und Argon enthaltende Syntheserohgas zu erhalten, und wobei zumindest ein Teil der von Kohlenmonoxid, Methan und Argon freien Wasserstofffraktion ggf. nach Zumischung von Stickstoff als Make-up-Gas aus der Bildungseinrichtung abziehbar ist.

Vorzugsweise umfasst die Bildungseinrichtung einen stromaufwärts des kryogenen Gaszerlegers angeordneten Gastrockner, mit dessen Hilfe aus dem Rohwasserstoff bzw. aus dem aufbereiteten Rohwasserstoff Wasser und ggf. vorhandene Kohlendioxidreste abgetrennt werden können, um einen trockenen Gasstrom als Einsatz (Kryo-Einsatz) für den kryogenen Gaszerleger zu gewinnen. Bei dem Gastrockner kann es sich etwa um einen Temperatur- oder Druckwechseladsorber handeln, der Wasser und ggf. Kohlendioxidreste adsorptiv aus dem zugeführten Gasstrom abtrennt. Der Einsatz anderer Gastrockner soll jedoch nicht ausgeschlossen sein.

Besonders bevorzugt ist in der Bildungseinrichtung stromaufwärts des Gastrockners ein Methanisierer zur Aufbereitung des Rohwasserstoffs angeordnet, in dem im Rohwasserstoff enthaltenes Kohlenmonoxid und Kohlendioxid mit Wasserstoff zu Methan und Wasser umgesetzt werden können.

Die erfindungsgemäße Vorrichtung weiterbildend wird vorgeschlagen, dass der kryogene Gaszerleger neben Leitungen zur Führung der Verfahrensströme zumindest einen Wärmetauscher, in dem der Kryo-Einsatz gegen anzuwärmende Verfahrensströme abgekühlt und partiell kondensiert werden kann, einen Abscheider zur Trennung des bei der partiellen Kondensation gebildeten zweiphasigen Stoffgemisches in eine methanreiche Flüssigphase und eine wasserstoffreiche Gasphase, sowie eine Waschkolonne umfasst, der die im Abscheider erhältliche wasserstoffreiche Gasphase zur Wäsche mit flüssigem Stickstoff zuführbar ist, um eine Stickstoff, Argon und Methan enthaltende Sumpffraktion sowie die von Kohlenmonoxid, Methan und Argon freie Wasserstofffraktion zu erhalten.

Sinnvollerweise ist die Waschkolonne so mit dem Wärmetauscher verbunden, dass zumindest ein Teil der wasserstoffreichen Gasphase im Wärmetauscher angewärmt werden kann, wobei der Teil der wasserstoffreichen Gasphase vor und/oder während und/oder nach der Anwärmung mit Stickstoff zum Make-up-Gas ergänzt wird.

Vorzugsweise ist der Abscheider über den Wärmetauscher so mit der Reformiereinrichtung verbunden, dass die methanreiche Flüssigphase nach Verdampfung und Anwärmung im Wärmetauscher als das methanreiche, argon- und stickstoffarme Restgas oder als Teil des methanreichen, argon- und stickstoffarmen Restgases vor die Reformiereinrichtung zurückgeführt werden kann.

Weiterhin kann die Waschkolonne über den Wärmetauscher so mit der Reformiereinrichtung verbunden sein, dass ein Teil der Stickstoff, Argon und Methan enthaltenden Sumpffraktion nach Verdampfung und Anwärmung im Wärmetauscher allein oder als Teil des methanreichen, argon- und stickstoffarmen Restgases vor die Reformiereinrichtung zurückgeführt werden kann.

Darüber hinaus kann die Waschkolonne über den Wärmetauscher so mit einem Brenner verbunden sein, dass zumindest ein Teil der in der Waschkolonne erhältlichen wasserstoffreichen Gasphase dem Brenner als Brennstoff zuführbar ist.

Die Reformiereinrichtung kann einen Dampfreformer, einen POX-Reaktor, einen Autothermalreformer oder eine Verschaltung von zwei oder mehr derartiger Apparate umfassen.

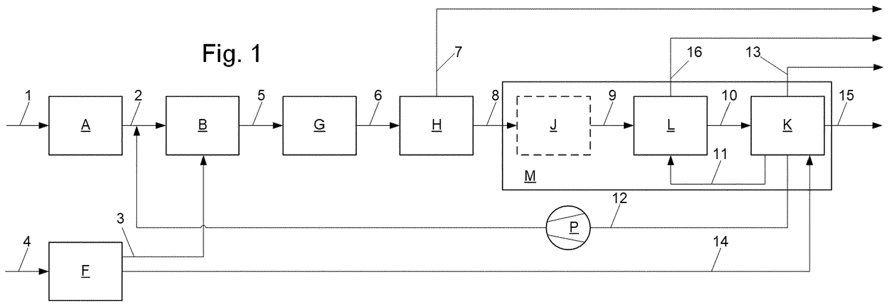

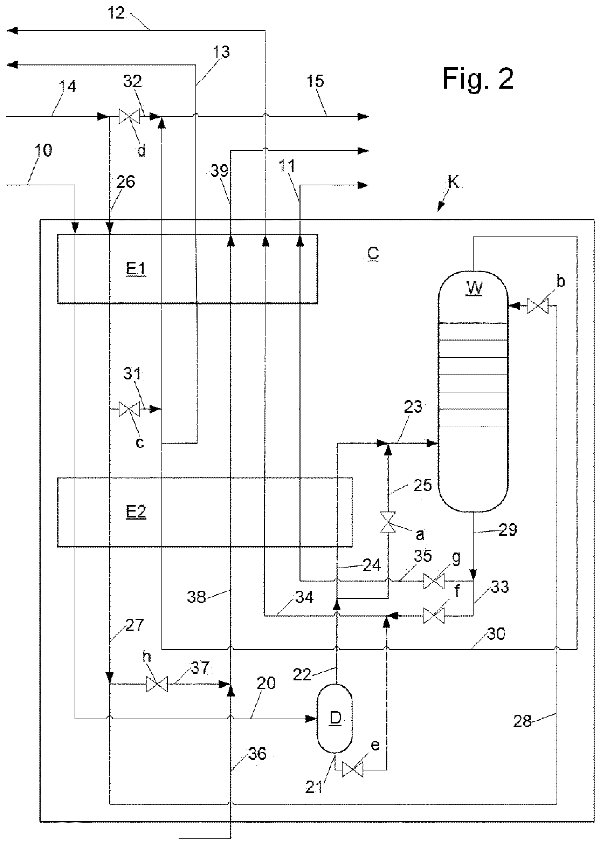

Im Folgenden soll die Erfindung anhand zweier in den **Figuren 1** und **2** schematisch dargestellter Ausführungsbeispiele näher erläutert werden.

Die Figur 1 zeigt eine bevorzugte Variante einer erfindungsgemäßen Einrichtung zur Erzeugung eines Make-up-Gases für eine Ammoniaksynthese.

Die Figur 2 zeigt eine kryogene Gaszerlegung, die besonders vorteilhaft bei der erfindungsgemäßen Gewinnung des Make-up-Gases eingesetzt werden kann.

In Figur 1 wird ein kohlenwasserstoffhaltiger Einsatz 1, bei dem es sich etwa um Erdgas handelt, einer Entschwefelungseinrichtung A zugeführt, um einen entschwefelten kohlenwasserstoffhaltigen Einsatz 2 zu erhalten, der in der Reformiereinrichtung B unter Verwendung von Sauerstoff 3, der in einem Luftzerleger F aus Luft 4 gewonnen wird, beispielsweise durch Partielle Oxidation oder Autothermalreformierung zu einem Wasserstoff, Kohlenmonoxid, Kohlendioxid sowie Argon enthaltenden Syntheserohgas 5 umgesetzt wird. Zur Erhöhung des Wasserstoffanteils wird das Syntheserohgas 5 einer Wassergas-Konvertierung G unterzogen, bei der Kohlenmonoxid mit Wasser zu Wasserstoff und Kohlendioxid reagiert und eine kohlenmonoxidarme Gasfraktion 6 entsteht, aus der der überwiegende Teil des Kohlendioxids in einer Sauergaswäsche H entfernt wird. Das abgetrennte Kohlendioxid 7 wird einer Sequestrierung oder stofflichen Nutzung zugeführt, während die verbleibende, wasserstoffreiche, Kohlenmonoxid, Methan und Argon umfassende, als Rohwasserstoff bezeichnete Gasfraktion 8 in die Bildungseinrichtung M weitergeführt wird, wo aus ihr unter Einsatz einer bevorzugt adsorptiv durchgeführten Trocknung L der Kryo-Einsatz 10 entsteht. Optional kann der Rohwasserstoff 8 einer Methanisierung J unterzogen werden, bei der Kohlenmonoxid und Kohlendioxid mit Wasserstoff zu Methan umgewandelt werden und ein weitgehend kohlenmonoxidfreies Gasgemisch 9 erhalten wird, aus dem der Kryo-Einsatz 10 durch Trocknung L entsteht. Im kryogenen Gaszerleger K, der ebenfalls Teil der Bildungseinrichtung M ist, werden aus dem Kryo-Einsatz 10 ein Stickstoff, Argon und Methan enthaltendes Purgegas 11, ein methanreiches, argon- und stickstoffarmes Restgas 12 sowie eine von Kohlenmonoxid, Methan und Argon freie Wasserstofffraktion abgetrennt. Ein kleinerer Teil 13 der Wasserstofffraktion kann als Brenngas 13 verwendet werden, während ein größerer Teil mit über Leitung 14 zugeführtem Stickstoff zum Make-up-Gas 15 ergänzt wird. Das methanreiche, argon- und stickstoffarme Restgas 12 wird über den Verdichter P vor die Reformiereinrichtung B zurückgeführt, während das Purgegas 11 - evtl. nach Nutzung als Spülgas in der Trocknung L - als Brenngas 16 ausgeschleust wird, um die Anreicherung von Argon im Reformerkreislauf zu verhindern.

Dem in der Cold-Box C angeordneten kryogenen Gaszerleger K der Figur 2 wird der wasserstoffreiche, Methan, Stickstoff sowie Argon und ggf. Kohlenmonoxid enthaltende Kryo-Einsatz 10 zugeführt, wo er in den Wärmetauschern E1 und E2 so weit abgekühlt wird, dass das in ihm enthaltene Methan nahezu vollständig auskondensiert. Das bei der Abkühlung gebildete zweiphasige Stoffgemisch 20 wird im Abscheider D in eine methanreiche Flüssigphase 21 und eine wasserstoffreiche Gasphase 22 getrennt, die den überwiegenden Teil des im Kryo-Einsatz 10 vorhandenen Argons und ggf. Kohlenmonoxids enthält. Die wasserstoffreiche Gasphase 22 wird der Waschkolonne W über Leitung 23 in ihren unteren Bereich zugeführt, wobei sie über das Regelventil a zunächst kontrolliert in zwei Teilströme 24 und 25 getrennt wird. Um das Temperaturprofil der Waschkolonne W zu regeln, wird der kleinere Teilstrom 24 im Wärmetauscher E2 angewärmt und anschließend wieder mit dem größeren Teilstrom 25 vereinigt. Durch die Regelung des Temperaturprofils ist es möglich, den Kryo-Einsatz 10 sehr tief abzukühlen und die Auskondensierung des Methans zu maximieren, ohne den Taupunkt des zur Spülung der Cold-Box C eingesetzten Stickstoffs (nicht dargestellt) zu unterschreiten.

Über Leitung 26 wird ein Teil des Stickstoffs 14, der beispielsweise mit erhöhtem Druck von einem kryogenen Luftzerleger gasförmig bezogen wird, in die Cold-Box C eingeleitet, wo durch Abkühlung in den Wärmetauschern E1 und E2 der Flüssigstickstoffstrom 27 entsteht, von dem der größte Teil über das Ventil b als Waschstickstoff 28 auf den Kopf der Waschkolonne W entspannt wird. Die wasserstoffreiche Gasphase 23 wird in der Waschkolonne W nach oben geführt und dabei intensiv mit dem Waschstickstoff 28 in Kontakt gebracht, wobei Argon und ggf. enthaltenes Kohlenmonoxid sowie Methanreste und ein Großteil des im Kryo-Einsatz 10 vorliegenden Stickstoffs ausgewaschen werden und in die Sumpffraktion gelangen, die über Leitung 29 abgezogen wird. Der Kopfstrom 30 der Waschkolonne W ist ein überwiegend aus Wasserstoff und Stickstoff bestehendes, von Kohlenmonoxid, Methan und Argon freies Gasgemisch, das zwar die an das Make-up-Gas für die Ammoniaksynthese gestellten Reinheitsanforderungen erfüllt, dessen Stickstoffgehalt aber noch zu niedrig ist. Dem Kopfstrom 30 wird daher nach einem ersten Anwärmschritt im Wärmetausche E2 über das Ventil c vorgekühlter Stickstoff 31 zugemischt. Nach einem zweiten Anwärmschritt im Wärmetauscher E1 wird über das Ventil d eine weitere Stickstoffmenge 32 zugeführt, um das Make-up-Gas 15 mit dem erforderlichen Wasserstoff/Stickstoff-Verhältnis zu erhalten. Ein Teil des Kopfstroms 30 wird stromaufwärts des Zumischstelle des vorgekühlten Stickstoffs 31 abgezweigt und nach Anwärmung im Wärmetauscher E1 beispielsweise einem in der Reformiereinrichtung B eingesetzten Dampfreformer oder einem befeuerten Anwärmofen als kohlenstofffreies Brenngas 13 zugeführt.

Die mit dem Druck des Kryo-Einsatzes 10 vorliegende methanreiche Flüssigphase 21 wird weitgehend argonfrei aus dem Abscheider D abgezogen und über das Ventil e geregelt mit einem über das Ventil f zugeführten ersten Teil 33 der Sumpffraktion 29 zum Stoffstrom 34 vereinigt, der nach Verdampfung und Anwärmung in den Wärmetauschern E2 und E1 das methanreiche, argon- und stickstoffarme Restgas 12 bildet, das vor die Reformierung R zurückgeführt wird. Um eine Argon-Anreicherung im Reformerkreislauf zu verhindern, wird ein zweiter Teil 35 der Sumpffraktion 29 über das Ventil g geregelt aus der Waschkolonne W abgezogen und nach Verdampfung und Anwärmung in den Wärmetauschern E2 und E1 als Purgegas 11 aus dem Prozess ausgeschleust.

Zum Ausgleich von Kälteverlusten wird Flüssigstickstoff 36 in die Cold-Box C eingeleitet, der durch einen über das Ventil h zugeführten Teil 37 des verflüssigten Stickstoffs 27 zum Stickstoffstrom 38 ergänzt wird, der nach Verdampfung und Anwärmung in den Wärmetauschern E2 und E1 über Leitung 39 entsorgt oder einer weiteren Nutzung zugeführt wird.

## Patentansprüche

1. Verfahren zur Erzeugung eines kohlenmonoxidfreien, weitgehend aus Wasserstoff und Stickstoff besehenden Make-up-Gases (15) für eine Ammoniaksynthese, wobei ein kohlenwasserstoffhaltiger Einsatz (2) in einer Reformiereinrichtung (B) umgesetzt wird, um ein Methan und Argon enthaltendes Syntheserohgas (5) zu erhalten, aus dem mit Hilfe von Wassergas-Konvertierung (G) und Sauergaswäsche (H) eine wasserstoffreiche, Kohlenmonoxid, Methan und Argon umfassende, als Rohwasserstoff bezeichnete Fraktion (8) entsteht, die zur Bildung des Make-up-Gases (15) verwendet wird, **dadurch gekennzeichnet, dass** der Rohwasserstoff (8) mit Hilfe einer kryogenen Gaszerlegung (K) in eine von Kohlenmonoxid, Methan und Argon freie Wasserstofffraktion (30) sowie ein methanreiches, argon- und stickstoffarmes Restgas (12) getrennt wird, das zurückgeführt und in der Reformiereinrichtung (B) umgesetzt wird, um das Methan und Argon enthaltende Syntheserohgas (5) zu erhalten, während zumindest ein Teil der von Kohlenmonoxid, Methan und Argon freien Wasserstofffraktion (30) als Make-up-Gas (15) weitergeführt oder mit Stickstoff zum Make-up-Gas (15) ergänzt wird.

2. Verfahren nach Anspruch 1, **dadurch gekennzeichnet, dass** aus dem Rohwasserstoff (8) durch Trocknung (L) ein Einsatz (Kryo-Einsatz) (10) für die kryogene Gaszerlegung (K) erhalten wird.

3. Verfahren nach Anspruch 1, **dadurch gekennzeichnet, dass** aus dem Rohwasserstoff (8) durch Methanisierung (J) und anschließende Trocknung (L) ein Einsatz (Kryo-Einsatz) (10) für die kryogene Gaszerlegung (K) erhalten wird.

4. Verfahren nach einem der Ansprüche 2 oder 3, **dadurch gekennzeichnet, dass** aus dem Kryo-Einsatz (10) in der kryogenen Gaszerlegung (K) durch Abkühlung ein zweiphasiges Stoffgemisch (20) gebildet wird, das in einem Abscheider (D) in eine methanreiche Flüssigphase (21) und eine wasserstoffreiche Gasphase (22) getrennt wird, wobei die methanreiche Flüssigphase (21) nach Verdampfung und Anwärmung gegen abzukühlende Verfahrensströme zumindest einen Teil des methanreichen, argon- und stickstoffarmen Restgases (12) bildet und die wasserstoffreiche Gasphase (22) in einer Waschkolonne (W) einer Wäsche mit flüssigem Stickstoff (28) unterzogen wird, bei der eine Stickstoff, Argon und Methan enthaltende Sumpffraktion (29) sowie die von Kohlenmonoxid, Methan und Argon freie Wasserstofffraktion (30) erhalten werden.

5. Verfahren nach Anspruch 4, **dadurch gekennzeichnet, dass** zumindest ein Teil (35) der in der Waschkolonne (W) erhaltenen, weitgehend aus Stickstoff, Argon und Methan bestehenden Sumpffraktion (29) nach Verdampfung und Anwärmung gegen abzukühlende Verfahrensströme verworfen wird.

6. Verfahren nach Anspruch 4, **dadurch gekennzeichnet, dass** die in der Waschkolonne (W) erhaltene, weitgehend aus Stickstoff, Argon und Methan bestehende Sumpffraktion (29) in eine erste (35) und eine zweite Fraktion (33) aufgeteilt wird, von denen die erste (35) nach Verdampfung und Anwärmung gegen abzukühlende Verfahrensströme verworfen und die zweite (33) mit der im Abscheider (D) erhaltenen methanreichen Flüssigphase (21) vereinigt wird.

7. Verfahren nach einem der Ansprüche 4 bis 6, **dadurch gekennzeichnet, dass** die im Abscheider (D) erhaltene wasserstoffreiche Gasphase (22) stromaufwärts der Waschkolonne (W) gegen abzukühlende Verfahrensströme angewärmt wird.

8. Verfahren nach einem der Ansprüche 4 bis 7, **dadurch gekennzeichnet, dass** zumindest einem Teil der in der Waschkolonne (W) erhaltenen, von Kohlenmonoxid, Methan und Argon freien Wasserstofffraktion (30) vor und/oder während und/oder nach ihrer Anwärmung gegen abzukühlende Verfahrensströme Stickstoff (31, 32) zugemischt wird, um das Make-up-Gas (15) zu erhalten.

9. Verfahren nach einem der Ansprüchen 1 bis 8, **dadurch gekennzeichnet, dass** ein Teil (13) der in der Waschkolonne (W) erhaltenen, von Kohlenmonoxid, Methan und Argon freien Wasserstofffraktion (30) verbrannt wird, um Wärme für die Reformiereinrichtung bereitzustellen.

10. Verfahren nach einem der Ansprüche 1 bis 6, **dadurch gekennzeichnet, dass** der kohlenwasserstoffhaltige Einsatz (2) durch Dampfreformierung, Partielle Oxidation, Autothermalreformierung oder einer Kombination dieser Verfahren zu dem Methan und Argon enthaltenden Syntheserohgas (5) reformiert wird.

11. Vorrichtung zur Erzeugung eines kohlenmonoxidfreien, weitgehend aus Wasserstoff und Stickstoff besehenden Make-up-Gases (15) für eine Ammoniaksynthese, mit einer Reformiereinrichtung (B), in der ein kohlenwasserstoffhaltiger Einsatz (2) umgesetzt werden kann, um ein Methan und Argon enthaltenden Syntheserohgas (5) zu erhalten, einer Wassergas-Konvertierung (G) und einer Sauergaswäsche (H), mit deren Hilfe aus dem Syntheserohgas (5) eine wasserstoffreiche, Kohlenmonoxid, Methan und Argon umfassende, als Rohwasserstoff bezeichnete Fraktion (8) erzeugt werden kann, sowie einer Bildungseinrichtung (M), in der aus dem Rohwasserstoff (8) das Make-up-Gas (15) gebildet werden kann, **dadurch gekennzeichnet, dass** die Bildungseinrichtung (M) einen kryogenen Gaszerleger (K) umfasst, mit dessen Hilfe der Rohwasserstoff (8) in eine von Kohlenmonoxid, Methan und Argon freie Wasserstofffraktion sowie ein methanreiches, argon- und stickstoffarmes Restgas (12) trennbar ist, wobei die Bildungseinrichtung (M) mit der Reformeireinrichtung (B) derart verbunden ist, dass das Restgas (12) zurückgeführt und durch Reformierung umgesetzt werden kann, um das Methan und Argon enthaltende Syntheserohgas (5) zu erhalten, und wobei zumindest ein Teil der von Kohlenmonoxid, Methan und Argon freien Wasserstofffraktion ggf. nach Zumischung von Stickstoff (14) als Make-up-Gas (15) aus der Bildungseinrichtung (M) abziehbar ist.

12. Vorrichtung nach Anspruch 11, **dadurch gekennzeichnet, dass** die Bildungseinrichtung (M) einen stromaufwärts des kryogenen Gaszerlegers (K) angeordneten Gastrockner (L) umfasst, mit dem Wasser und ggf. Kohlendioxid aus dem Rohwasserstoff (8) bzw. aus aufbereitetem Rohwasserstoff (9) abgetrennt und ein Einsatz (Kryo-Einsatz) (10) für den kryogenen Gaszerleger (K) erhalten werden kann.

13. Vorrichtung nach Anspruch 12, **dadurch gekennzeichnet, dass** die Bildungseinrichtung (M) einen stromaufwärts des Gastrockners angeordneten Methanisierer (J) umfasst, in dem der Rohwasserstoff (8) durch Methanisierung aufbereitet werden kann.

14. Vorrichtung nach einem der Ansprüche 11 bis 13, **dadurch gekennzeichnet, dass** der kryogene Gaszerleger (K) neben Leitungen zur Führung der Verfahrensströme zumindest einen Wärmetauscher (E1, E2), in dem der Kryo-Einsatz (10) gegen anzuwärmende Verfahrensströme abgekühlt und partiell kondensiert werden kann, einen Abscheider (D) zur Trennung des bei der partiellen Kondensation gebildeten zweiphasigen Stoffgemisches (20) in eine methanreiche Flüssigphase (21) und eine wasserstoffreiche Gasphase (22), sowie eine Waschkolonne (W) umfasst, der die im Abscheider (D) erhältliche wasserstoffreiche Gasphase (22) zur Wäsche mit flüssigem Stickstoff (28) zuführbar ist, um eine Stickstoff, Argon und Methan enthaltende Sumpffraktion (29) sowie die von Kohlenmonoxid, Methan und Argon freie Wasserstofffraktion (30) zu erhalten.

15. Vorrichtung nach Anspruch 14, **dadurch gekennzeichnet, dass** der Abscheider (D) über den oder die Wärmetauscher (E1, E2) mit der Reformiereinrichtung (B) so verbunden ist, dass die methanreiche Flüssigphase (21) nach Verdampfung und Anwärmung in dem Wärmetauscher oder den Wärmetauschern (E1, E2) als Teil des methanreichen, argon- und stickstoffarmen Restgases (12) vor die Reformiereinrichtung (B) zurückgeführt werden kann.

16. Vorrichtung nach einem der Ansprüche 14 oder 15, **dadurch gekennzeichnet, dass** die Waschkolonne (W) über den oder die Wärmetauscher (E1, E2) so mit der Reformiereinrichtung (B) verbunden ist, dass ein Teil (33) der Stickstoff, Argon und Methan enthaltenden Sumpffraktion (29) nach Verdampfung und Anwärmung in dem Wärmetauscher oder den Wärmetauschern (E1, E2) als Teil des methanreichen, argon- und stickstoffarmen Restgases (12) vor die Reformiereinrichtung (B) zurückgeführt werden kann.

17. Vorrichtung nach einem der Ansprüche 14 bis 16, **dadurch gekennzeichnet, dass** die Waschkolonne (W) so mit dem Wärmetauscher oder den Wärmetauschern (E1, E2) verbunden ist, dass zumindest ein Teil der von Kohlenmonoxid, Methan und Argon freien Wasserstofffraktion (30) im Wärmetauscher oder den Wärmetauschern (E1, E2) angewärmt werden kann, wobei er vor und/oder während und/oder nach der Anwärmung mit Stickstoff (31, 32) zum Make-up-Gas (15) ergänzt wird.

18. Vorrichtung nach einem der Ansprüche 14 bis 17, **dadurch gekennzeichnet, dass** die Waschkolonne (W) über den oder die Wärmetauscher (E1, E2) so mit einem Brenner verbunden ist, dass zumindest ein Teil (13) der in der Waschkolonne (W) erhältlichen, von Kohlenmonoxid, Methan und Argon freien Wasserstofffraktion (30) dem Brenner als Brennstoff zuführbar ist.

19. Vorrichtung nach einem der Ansprüche 11 bis 18, **dadurch gekennzeichnet, dass** die Reformiereinrichtung (B) einen Dampfreformer und/oder einen POX-Reaktor und/oder einen Autothermalreformer umfasst.
